# EUROPEAN PATENT SPECIFICATION

(11) **EP 0 384 404 B1**
(45) Date of publication and mention of the grant of the patent: **27.04.1994**
(21) Application number: 90103254.0
(22) Date of filing: 20.02.1990
(51) Int. Cl.: C09J 175/04, B32B 7/12, B65D 65/40

(54) **Polyisocyanate bonding agents for laminate films**
Polyisocyanat-Haftmittel für Filme für Schichtstoffe
Adhésifs de polyisocyanate pour films pour stratifiés

(30) Priority: 21.02.1989 IT 1949789
(43) Date of publication of application: 29.08.1990
(73) Proprietor: MINISTERO DELL' UNIVERSITA' E DELLA RICERCA SCIENTIFICA E TECNOLOGICA, 00196 Roma (IT)
(72) Inventor: Pizzigoni, Giuseppe, I-21054 Fagnano Olona, Varese (IT); Porra', Angelo, I-21057 Olgiate Olona, Varese (IT)
(74) Representative: Barz, Peter, Dr.

(56) References cited:
- EP-A- 0 340 586
- DE-A- 1 694 079
- DERWENT ACCESSION, no. 86-221 353, Questel Telesystems (WPIL) DERWENT PUBLICATIONS LTD., London,GB; & JP-A-61 151 225
- DERWENT ACCESSION, no. 86 240 994, Questel Telesystems (WPIL) DERWENT PUBLICATIONS LTD., London,GB; & JP-A-61 168 610

## Description

The present invention relates to novel liquid polyisocyanate adhesives for laminate films. In particular, the present invention relates to modified, solventless, liquid polyisocyanate adhesives useful for the preparation of laminate materials substantially composed of two or more film layers bonded to each other by means of an adhesive.

The above materials are used in general in the packaging field. A particular application in that sector for which the adhesives according to the present invention are especially suitable is the packaging of products which have to be subjected to the joint action of water and high temperatures, such as, e.g., in processes for the pasteurization of food.

For the above specified purposes, multilayer laminates are generally used which are substantially composed of films made of plastic materials (polyolefin films, polyester films, polyamide films, cellulose films, etc.) and are to impart to the package the necessary properties of physico-mechanical strength, impermeability to liquids (water, oil) and/or to gases, etc. which characteristics are preferably combined with high flexibility and homogeneity, etc. Said films or thin sheets of plastic materials should be bonded to each other, in one or more successive layer(s), by means of adhesives which, without jeopardizing the above properties of the film. secure a good adhesion among the layers, also under conditions of post-treatment of the packaged article, as it occurs in the case of pasteurization, with an as long as possible useful lifetime under the prospective conditions of storage, preservation, use, etc.

The preparation of laminate materials of the above type which are composed of a plurality of layers and are intended for use in the packaging field is known. As already mentioned, the layers thereof are composed of films of plastic materials, and - also very common - of metal films or metallized films, in general of aluminum or of metallized polyolefins, and the like, used for the production of particularly impermeable and mechanically strong packages.

As regards, in particular, the adhesives employed in the production of such laminates, it is known to use (see e.g. DE-A-16 94 079) polyisocyanate adhesives for coupling laminate films composed of a plurality of layers of the type defined above. Such polyisocyanate adhesives are obtained by reaction of a di- or poly-isocyanate with a polymeric polyol in ratios such as to result in a reaction product containing terminal isocyanate groups.

The adhesives obtained in such a way in an organic solvent are applied by means of suitable equipment (defined as "conventional" within the scope of the present invention) onto the films to be bonded. Due to the water present in the surrounding environment in the form of air humidity or absorbed onto the surfaces of the films to be coupled, said adhesives undergo crosslinking and develop the desired bonding strength. However, the presence of the organic solvent makes it necessary to remove same before the film is coupled, with the consequent economic and operating disadvantages. Moreover the corresponding strict regulations of toxicologic and environmental character cause additional problems.

On the other hand, solventless adhesive products are also known, such as disclosed, e.g., in DE-A-25 49 227. Unfortunately, according to the state of the art, the laminates obtainable by using polyisocyanate adhesives of the solventless type are generally not suitable for the practice of pasteurization.

EP-A-340 586, a document relevant under Art. 54(3) and (4) EPC for all designated States except GR and DK, discloses adhesives on the basis of polyols and polyisocyanates which may be modified by the addition of hydroxycarboxylic acids or internal esters thereof, respectively.

An object of the present invention is to provide liquid, solventless polyisocyanate adhesives, which can be used in particular for packaging materials intended for treatment with aqueous liquids at high temperatures, such as pasteurization, without undergoing a substantial delamination and/or deterioration. Additionally, a satisfactory and durable adhesion, a long useful lifetime etc. are to be integrally retained, thereby completing the available set of adhesives.

Another object is the provision of a corresponding process for the preparation of said adhesives which requires only inexpensive raw materials which can easily be prepared and/or are commercially available.

A further object is the provision of laminate materials obtained by using the adhesives according to the present invention.

These and still further objects which will become clearer to those skilled in the art from the following disclosure, are achieved, according to the present invention, by polyisocyanate adhesives modified by means of small amounts of at least one aliphatic hydroxycarboxylic acid and/or anhydride thereof, optionally substituted with inert groups, in the absence of solvents.

It has surprisingly been found that the addition to a conventional polyisocyanate polymer of small amounts of aliphatic hydroxycarboxylic acids or the corresponding anhydrides leads to the formation of a modified polyisocyanate adhesive which endows the laminates obtained by means of the coupling of at least two films, one of which preferably is a metal film or a metallized film, with significantly improved resistance to delamination, both before and after the action of water at high temperatures (pasteurization).

The polyisocyanate adhesives according to the present invention, therefore, are composed of a per se conventional liquid polyisocyanate derivative, modified with minor amounts of at least one aliphatic hydroxycarboxylic acid, optionally substituted with one or more inert groups (e.g. halogen, (C₁₋₄)-alkoxy, NO₂) and (preferably) containing a total number of OH + COOH groups not higher than 6, and/or an anhydride thereof.

The modified polyisocyanate adhesives according to the present invention may be obtained by means of the reaction of at least one polyether-polyol and/or polyester-polyol with at least one polyisocyanate in the presence of minor amounts of at least one aliphatic hydroxycarboxylic acid as defined above, or an anhydride thereof, under operating conditions which substantially fall within the conditions known from the prior art for the preparation of the non-modified polyisocyanate derivatives, such as disclosed, e.g., in DE-A-25 49 227, the contents of which are incorporated herein by reference.

The (preferred) polyisocyanate derivatives of the present invention are those which are prepared from linear and/or branched aliphatic polyether-polyols and/or polyester-polyols having a molecular weight of from 400 to 4000. Examples thereof are known (commercially available) products, such as, e.g., Poliurax ® Poliol PPG (manufactured by B.P., United Kingdom), Setatack ® EPL (manufactured by Synthese, The Netherlands), Terathane ® (manufactured by Du Pont, U.S.A.)and Glendion ® (manufactured by Montedipe, Italy).

The polyisocyanates (preferably) are aliphatic and/or aromatic polyisocyanates containing 2 or 3 NCO groups per molecule.

Suitable polyisocyanates are, e.g., methylene diphenyldiisocyanate (MDI), toluene diisocyanate (TDI), hexamethylene diisocyanate (HDI), isophorone diisocyanate (IPDI), polymeric MDI, and the like.

As modifiers aliphatic carboxylic acids are used which contain one or more OH group(s) and one or more COOH group(s) in their molecule (the total thereof not exceeding 6), and preferably contain from 1 to 5 of such groups, wherein the number of OH groups can also be different from the number of COOH groups, and in which the aliphatic moiety can also contain substituent groups, provided that such groups are inert under the reaction conditions. Said acids usually contain from 2 to 10 carbon atoms, preferably from 3 to 8 carbon atoms.

Citric acid, malic acid, tartaric acid, gluconic acid, dimethylolpropionic acid, lactic acid, tartronic acid, citramalic acid, and the like are particularly suitable modifiers for the purposes of the present invention.

The modifiers are (preferably) used in amounts of from about 0.025 to about 2%, based on the total weight of polyol and polyisocyanate.

The products resulting from the reaction of the polyether-polyols and/or polyester-polyols with the polyisocyanates in the presence of the aliphatic hydroxycarboxylic acids as defined herein essentially comprise modified polyisocyanate derivatives having an average content of NCO groups of from 1% to 10%, with a content of modifier acid within the range of from 0.025 to 2%, which values are percentages by weight relative to the dry matter, and showing a viscosity of from 1000 to 8000 mPas at 50°C.

The addition of the aliphatic hydroxycarboxylic acid in order to modify the polyisocyanate derivative can be carried out at any time. Said addition is preferably carried out together with the addition of the polyol, from the beginning of the reaction.

The amount of aliphatic hydroxycarboxylic acid used according to the present invention can vary according to the desired characteristics of the final adhesive, as a function of the acid used, etc. and therefore said amount is not a critical feature of the present invention, as long as it is within the range given above.

In general, amounts preferably ranging from 0.05 to 1%, as defined above, yield satisfactory results.

The other operating parameters, such as temperature, reaction time, etc. substantially fall within the ranges adopted in the prior art for the preparation of isocyanate adhesives.

Therefore, temperatures within the range of from 30°C up to 150°C, under atmospheric pressure, are usually employed.

The reaction times can vary within wide ranges, depending on the reactants, the temperature, the relative ratios, etc. For example, in case of an adhesive according to the present invention, prepared by starting from Poliurax ® Poliol PPG 2025 (PPG) and MDI, with a ratio of NCO/OH = 2, the reaction is complete within about one hour.

In this way the adhesive is obtained ready for use in the process of coupling the layers which constitute the laminates for packaging. The layers are composed of materials normally used in the manufacture of laminates according to the prior art such as, e.g., polyolefin materials, polyester materials, polyamide materials, cellulose materials, aluminum, etc.

The resulting laminate shows resistance to the action of water at high temperatures, under pasteurization conditions, as required for the application in packages for alimentary products, sanitary products, and the like. The amount of adhesive applied can vary depending on the operating conditions, the characteristics of the package, etc. Amounts within the range of from 1.0 to 3.0 g/m² have proved to be efficient for the usually employed films.

Finally, the application can be carried out by means of the use of conventional application equipment and methods.

The following examples are given in order to illustrate the present invention without being a limitation of possible embodiments thereof.

### EXAMPLE 1

0.375 g of finely ground dimethylol propionic acid (ADMP) is added to 402 g of a polyoxypropylene glycol (PPG) having a molecular weight of 2000. The mixture is kept at 50°C for 12 hours. 97.98 g of 4,4'-methylene diphenyldiisocyanate (MDI) are weighed separately and are fed into a 1 l-glass reactor equipped with anchor stirrer, condenser, thermometer, heating/cooling device and nitrogen inlet fitting. The reactor is heated up to 70°C and is maintained at this temperature for 15 minutes. Then the mixture of PPG and ADMP, preheated at 50°C, is introduced into the reactor over 5-10 minutes.

Owing to the exothermic reaction, the temperature rises to 105°C. 60 minutes after the beginning of the feed of PPG and ADMP, the reaction mixture is cooled down to 50°C and the product is discharged into a tightly-sealed container.

All of the above operations are carried out under a nitrogen stream.
The product obtained showed the following characteristics:

| | |
|---|---|
| - viscosity at 50°C (measured on the instrument Rheomat 15 manufactured by Contraves - Switzerland) | 2750 mPa.s |
| - content of -NCO groups (ASTM D 2572-80) | 3.1% |

### EXAMPLE 2

0.350 g of finely ground malic acid is added to 397.2 g of a polyoxypropylene glycol (PPG) having an average molecular weight of 2000. The mixture is kept at 50°C for 12 hours. 102.75 g of 4,4'-methylene diphenyldiisocyanate (MDI) are weighed separately and are placed into a 1 l-glass reactor equipped with helical stirrer, condenser, thermometer, heating/cooling device and nitrogen inlet fitting. The reactor is heated up to 70°C and is maintained at this temperature for 15 minutes. Then the mixture of PPG and malic acid, pre-heated at 50°C, is fed into the reactor over 5-10 minutes.

Owing to the exothermic reaction, the temperature rises to 110°C. 90 minutes after the beginning of the feed of PPG and malic acid to the reactor the reaction mixture is cooled down and at a temperature of 50°C the product is discharged into a tightly-sealed container.

All of the above operations are carried out under a nitrogen stream.
The product obtained showed the following characteristics:

| | |
|---|---|
| - viscosity at 50°C (Rheomat 15) | 4350 mPa.s |
| - content of -NCO groups (ASTM D 2572-80) | 3.1% |

### EXAMPLE 3

0.500 g of finely ground citric acid is added to 801.1 g of a polyoxypropylene glycol (PPG) having a molecular weight of 2000. The mixture is kept at 50°C for 12 hours.

198.9 g of 4,4'-methylene diphenyldiisocyanate (MDI) are weighed separately and are placed into a 1 l-glass reactor equipped with helical stirrer, condenser, thermometer, heating/cooling device and nitrogen inlet fitting. The reactor is heated up to 70°C and is maintained at this temperature for 15 minutes. Then the mixture of PPG and citric acid, pre-heated at 50°C, is added over 5-10 minutes.

Owing to the exothermic reaction, the temperature rises to 110°C. 60 minutes after the beginning of the feed of PPG and citric acid to the reactor, the reaction mixture is cooled down to a temperature of 50°C and the product is discharged into a tightly-sealed container.

All of the above operations are carried out under a nitrogen stream.
The product obtained showed the following characteristics:

| | |
|---|---|
| - viscosity at 50°C (Rheomat 15) | 3300 mPa.s |
| - content of -NCO groups (ASTM D 2572-80) | 3.0% |

### EXAMPLE 4 (Comparative Example)

397.2 g of a polyoxypropylene glycol (PPG) having a molecular 10 weight of 2000 are heated to a temperature of 50°C. 102.75 g of 4,4′-methylene diphenyldiisocyanate (MDI) are weighed separately and are fed into a 1 l-glass reactor equipped with helical stirrer, condenser, thermometer, heating/cooling device and nitrogen inlet fitting. The reactor is heated up to 70°C and is maintained at this temperature for 15 minutes. Then the PPG, pre-heated at 50°C, is added over 5-10 minutes.

Owing to the exothermic reaction, the temperature rises to 110°C. 90 minutes after the beginning of the feed of PPG to the reactor the reaction mixture is cooled down and at a temperature of 50°C the product is discharged into a tightly-sealed container.

All of the above operations are carried out under a nitrogen stream.
The product obtained showed the following characteristics:

| | |
|---|---|
| - viscosity at 50°C (Rheomat 15) | 2950 mPa.s |
| - content of -NCO groups (ASTM D 2572-80) | 3.5% |

### EXAMPLE 5

### Resistance to Pasteurization

An aluminum film (thickness 17 µm) is coupled with a non-oriented polypropylene film manufactured by Moplefan, Italy (MOPLEFAN ® GT 75, thickness 75 µm) by using 2 g/m² of the adhesives according to the preceding Examples 1-4. After a stay time of 7 days at 23°C and a relative humidity of 50%, a strip of composite of 130x230 mm is folded upon itself and thermowelded in order to produce a bag which is filled with 30 ml of water and subjected to pasteurization by dipping it into water of 85°C for 30 minutes.

Three days after the pasteurization the bag is opened and dried and strips of 15 mm width are prepared therefrom. Said strips are subjected to delamination by means of an INSTRON dynamometer Mod. 1011 with a speed of separation of the clamps of 100 mm/minute. The process is repeated for each adhesive. The values of the delamination force (the T-peel Test), as g/cm, are reported in Table 1.

**TABLE 1**

| Example | Delamination, g/cm | |
|---|---|---|
| | 7 days after the coupling | after pasteurization (30 minutes at 85°C in water) |
| 1 | 170 | 200 |
| 2 | 160 | 200 |
| 3 | 170 | 230 |
| 4 (without hydroxyacid) | 125 | 140 |

From a comparison of the above data the better performance of the adhesives according to the present invention can clearly be taken.

## Claims (Claims for the following Contracting State(s): AT, BE, CH, DE, FR, GB, LI, NL, SE)

1. Solventless Polyisocyanate adhesives, obtainable by reacting at least one linear or branched aliphatic polyester-polyol and/or polyether-polyol having an average molecular weight of from 400 to 4000 with at least one aliphatic and/or aromatic polyisocyanate containing 2 or 3 NCO groups per molecule in the presence of 0.025 to 2% by weight, based on the total weight of polyol and polyisocyanate, of at least one aliphatic hydroxycarboxylic acid containing a total number of OH and COOH groups not exceeding 6 or an anhydride thereof as modifier.

2. Adhesives according to claim 1, wherein the at least one aliphatic hydroxycarboxylic acid is selected from citric acid, malic acid, tartaric acid, gluconic acid, dimethylol propionic acid, lactic acid, tartronic acid and citramalic acid.

3. Adhesives according to any one of the preceding claims, having an average content of NCO groups of from 1% to 10% by weight relative to the total weight of polyol and polyisocyanate, and a viscosity of from 1000 to 8000 mPas at 50°C.

4. Process for preparing the modified polyisocyanate adhesives according to any one of claims 1 to 3, wherein at least one polyether-polyol and/or at least one polyester-polyol as defined in claim 1 is reacted with at least one polyisocyanate as defined in claim 1 in the presence of 0.025 to 2% by weight, based on the total weight of polyol and polyisocyanate, of at least one aliphatic hydroxycarboxylic acid or anhydride thereof as defined in anyone of claims 1 and 2.

5. Process according to claim 4, wherein the hydroxycarboxylic acid is fed to the reactor in metered amounts together with the polyether-polyol and/or polyester-polyol.

6. Process according to any one of claims 4 and 5, wherein the hydroxycarboxylic acid is used in an amount of from 0.05 to 1% by weight, based on the total weight of polyol and polyisocyanate.

7. Process according to any one of claims 4 to 6, wherein the temperature employed ranges from 30°C to 150°C.

8. Multilayer laminates made from films of plastic materials and/or from metallized films and/or from metal films, produced by use of the polyisocyanate adhesives according to any one of claims 1 to 3.

## Claims (Claims for the following Contracting State(s): DK, GR)

1. Solventless Polyisocyanate adhesives, obtainable by reacting at least one polyether-polyol and/or at least one polyester-polyol with at least one polyisocyanate in the presence of 0.025 to 2% by weight, based on the total weight of polyol and polyisocyanate, of at least one aliphatic hydroxycarboxylic acid or a corresponding anhydride as modifier.

2. Adhesives according to claim 1, wherein the at least one aliphatic hydroxycarboxylic acid, or anhydride thereof, contains a total number of OH and COOH groups not exceeding 6 and is preferably selected from citric acid, malic acid, tartaric acid, gluconic acid, dimethylol propionic acid, lactic acid, tartronic acid and citramalic acid.

3. Adhesives according to any one of the preceding claims, having an average content of NCO groups of from 1% to 10% by weight relative to the total weight of polyol and polyisocyanate, and a viscosity of from 1000 to 8000 mPas at 50°C.

4. Process for preparing the modified polyisocyanate adhesives according to any one of claims 1 to 3, wherein at least one polyether-polyol and/or at least one polyester-polyol is reacted with at least one polyisocyanate in the presence of 0.025 to 2% by weight, based on the total weight of polyol and polyisocyanate, of at least one aliphatic hydroxycarboxylic acid or anhydride thereof as defined in anyone of claims 1 and 2.

5. Process according to claim 4 wherein the polyester-polyol and/or polyether-polyol is a linear or branched-aliphatic polyester-polyol and/or polyether-polyol having an average molecular weight of from 400 to 4000.

6. Process according to any one of claims 4 and 5, wherein the polyisocyanate is selected from aliphatic and/or aromatic polyisocyanates containing 2 or 3 NCO groups per molecule.

7. Process according to any one of claims 4 to 6, wherein the hydroxycarboxylic acid is fed to the reactor in metered amounts together with the polyether-polyol and/or polyester-polyol.

8. Process according to any one of claims 4 to 7, wherein the hydroxycarboxylic acid is used in an amount of from 0.05 to 1% by weight, based on the total weight of polyol and polyisocyanate.

9. Process according to any one of claims 4 to 8, wherein the temperature employed ranges from 30°C to 150°C.

10. Multilayer laminates made from films of plastic materials and/or from metallized films and/or from metal films, produced by use of the polyisocyanate adhesives according to any one of claims 1 to 3.

## Claims (Claims for the following Contracting State(s): ES)

1. Process for preparing solventless polyisocyanate adhesives, wherein at least one linear or branched aliphatic polyester-polyol and/or polyether-polyol having an average molecular weight of from 400 to 4000 is reacted with at least one aliphatic and/or aromatic polyisocyanate containing 2 or 3 NCO groups per molecule in the presence of 0.025 to 2% by weight, based on the total weight of polyol and polyisocyanate, of at least one aliphatic hydroxycarboxylic acid containing a total number of OH and COOH groups not exceeding 6 or an anhydride thereof as modifier.

2. Process according to claim 1, wherein the at least one aliphatic hydroxycarboxylic acid is selected from citric acid, malic acid, tartaric acid, gluconic acid, dimethylol propionic acid, lactic acid, tartronic acid and citramalic acid.

3. Process according to any one of the previous claims, wherein adhesives having an average content of NCO groups of from 1% to 10% by weight relative to the total weight of polyol and polyisocyanate, and a viscosity of from 1000 to 8000 mPas at 50°C are produced.

4. Process according to any one of claims 1 to 3, wherein the hydroxycarboxylic acid is fed to the reactor in metered amounts together with the polyether-polyol and/or polyester-polyol.

5. Process according to any one of claims 1 to 4, wherein the hydroxycarboxylic acid is used in an amount of from 0.05 to 1% by weight, based on the total weight of polyol and polyisocyanate.

6. Process according to any one of claims 1 to 5, wherein the temperature employed ranges from 30°C to 150°C.

7. Process for the production of multilayer laminates made from films of plastic materials and/or from metallized films and/or from metal films, wherein the polyisocyanate adhesives prepared according to the process of any one of claims 1 to 6 are employed.

## Patentansprüche (Patentansprüche für folgende(n) Vertragsstaat(en): AT, BE, CH, DE, FR, GB, LI, NL, SE)

1. Lösungsmittelfreie Polyisocyanat-Klebstoffe, erhältlich durch Umsetzen mindestens eines linearen oder verzweigten aliphatischen Polyester-polyols und/oder Polyether-polyols mit einem mittleren Molekulargewicht von 400 bis 4000 mit mindestens einem aliphatischen und/oder aromatischen Polyisocyanat, das 2 oder 3 NCO-Gruppen pro Molekül enthält, in Gegenwart von 0,025 bis 2 Gewichtsprozent, bezogen auf das Gesamtgewicht von Polyol und Polyisocyanat, mindestens einer aliphatischen Hydroxycarbonsäure, die eine Gesamtzahl von OH- und COOH-Gruppen von nicht mehr als 6 enthält, oder eines Anhydrids davon als Modifizierungsmittel.

2. Klebstoffe nach Anspruch 1, worin die mindestens eine aliphatische Hydroxycarbonsäure ausgewählt ist aus Citronensäure, Äpfelsäure, Weinsäure, Gluconsäure, Dimethylolpropionsäure, Milchsäure, Tartronsäure und Citramalsäure.

3. Klebstoffe nach irgendeinem der vorangehenden Ansprüche mit einem durchschnittlichen Gehalt an NCO-Gruppen von 1 bis 10 Gewichtsprozent, bezogen auf das Gesamtgewicht von Polyol und Polyisocyanat, und einer Viskosität von 1000 bis 8000 mPas bei 50°C.

4. Verfahren zur Herstellung der modifizierten Polyisocyanat-Klebstoffe nach irgendeinem der Ansprüche 1 bis 3, worin mindestens ein Polyether-polyol und/oder mindestens ein Polyester-polyol, welche wie in Anspruch 1 definiert sind, mit mindestens einem Polyisocyanat, das wie in Anspruch 1 definiert ist, in Gegenwart von 0,025 bis 2 Gewichtsprozent, bezogen auf das Gesamtgewicht von Polyol und Polyisocyanat, mindestens einer aliphatischen Hydroxycarbonsäure oder eines Anhydrids davon, welche wie in irgendeinem der Ansprüche 1 und 2 definiert sind, umgesetzt wird.

5. Verfahren nach Anspruch 4, worin die Hydroxycarbonsäure in abgemessenen Mengen zusammen mit dem Polyether-polyol und/oder Polyester-polyol in den Reaktor eingespeist wird.

6. Verfahren nach irgendeinem der Ansprüche 4 und 5, worin die Hydroxycarbonsäure in einer Menge von 0,05 bis 1 Gewichtsprozent, bezogen auf das Gesamtgewicht von Polyol und Polyisocyanat, verwendet wird.

7. Verfahren nach irgendeinem der Ansprüche 4 bis 6, worin die angewandte Temperatur im Bereich von 30 bis 150°C liegt.

8. Mehrschichtige Laminate, hergestellt aus Folien von Kunststoffmaterialien und/oder metallisierten Folien und/oder Metallfolien, hergestellt unter Verwendung der Polyisocyanat-Klebstoffe nach irgendeinem der Ansprüche 1 bis 3.

## Patentansprüche (Patentansprüche für folgende(n) Vertragsstaat(en): DK, GR)

1. Lösungsmittelfreie Polyisocyanat-Klebstoffe, erhältlich durch Umsetzen mindestens eines Polyether-polyols und/oder mindestens eines Polyester-polyols mit mindestens einem Polyisocyanat in Gegenwart von 0,025 bis 2 Gewichtsprozent, bezogen auf die Gesamtmenge von Polyol und Polyisocyanat, mindestens einer aliphatischen Hydroxycarbonsäure oder eines entsprechenden Anhydrids als Modifizierungsmittel.

2. Klebstoffe nach Anspruch 1, worin die mindestens eine aliphatische Hydroxycarbonsäure oder das Anhydrid davon eine Gesamtzahl von OH- und COOH-Gruppen von nicht mehr als 6 enthält und vorzugsweise ausgewählt ist aus Citronensäure, Äpfelsäure, Weinsäure, Gluconsäure, Dimethylolpropionsäure, Milchsäure, Tartronsäure und Citramalsäure.

3. Klebstoffe nach irgendeinem der vorangehenden Ansprüche mit einem durchschnittlichen Gehalt an NCO-Gruppen von 1 bis 10 Gewichtsprozent, bezogen auf das Gesamtgewicht von Polyol und Polyisocyanat, und einer Viskosität von 1000 bis 8000 mPas bei 50°C.

4. Verfahren zur Herstellung der modifizierten Polyisocyanat-Klebstoffe nach irgendeinem der Ansprüche 1 bis 3, worin mindestens ein Polyether-polyol und/oder mindestens ein Polyester-polyol mit mindestens einem Polyisocyanat in Gegenwart von 0,025 bis 2 Gewichtsprozent, bezogen auf das Gesamtgewicht von Polyol und Polyisocyanat, mindestens einer aliphatischen Hydroxycarbonsäure oder eines Anhydrids davon, welche wie in irgendeinem der Ansprüche 1 und 2 definiert sind, umgesetzt wird.

5. Verfahren nach Anspruch 4, worin das Polyester-polyol und/oder Polyether-polyol ein lineares oder verzweigtes aliphatisches Polyester-polyol und/oder Polyether-polyol mit einem mittleren Molekulargewicht von 400 bis 4000 ist.

6. Verfahren nach irgendeinem der Ansprüche 4 und 5, worin das Polyisocyanat ausgewählt ist aus aliphatischen und/oder aromatischen Polyisocyanaten, die 2 oder 3 NCO-Gruppen pro Molekül enthalten.

7. Verfahren nach irgendeinem der Ansprüche 4 bis 6, worin die Hydroxycarbonsäure in abgemessenen Mengen zusammen mit dem Polyether-polyol und/oder Polyester-polyol in den Reaktor eingespeist wird.

8. Verfahren nach irgendeinem der Ansprüche 4 bis 7, worin die Hydroxycarbonsäure in einer Menge von 0,05 bis 1 Gewichtsprozent, bezogen auf das Gesamtgewicht von Polyol und Polyisocyanat, verwendet wird.

9. Verfahren nach irgendeinem der Ansprüche 4 bis 8, worin die angewandte Temperatur im Bereich von 30 bis 150°C liegt.

10. Mehrschichtige Laminate, hergestellt aus Folien von Kunststoffmaterialien und/oder metallisierten Folien und/oder Metallfolien, hergestellt unter Verwendung der Polyisocyanat-Klebstoffe nach irgendeinem der Ansprüche 1 bis 3.

## Patentansprüche (Patentansprüche für folgende(n) Vertragsstaat(en): ES)

1. Verfahren zur Herstellung von lösungsmittelfreien Polyisocyanat-Klebstoffen, worin mindestens ein lineares oder verzweigtes aliphatisches Polyester-polyol und/oder Polyether-polyol mit einem mittleren Molekulargewicht von 400 bis 4000 mit mindestens einem aliphatischen und/oder aromatischen Polyisocyanat, das 2 oder 3 NCO-Gruppen pro Molekül enthält, in Gegenwart von 0,025 bis 2 Gewichtsprozent, bezogen auf das Gesamtgewicht von Polyol und Polyisocyanat, mindestens einer aliphatischen Hydroxycarbonsäure, die eine Gesamtzahl von OH- und COOH-Gruppen von nicht mehr als 6 enthält, oder eines Anhydrids davon als Modifizierungsmittel umgesetzt wird.

2. Verfahren nach Anspruch 1, worin die mindestens eine aliphatische Hydroxycarbonsäure ausgewählt ist aus Citronensäure, Äpfelsäure, Weinsäure, Gluconsäure, Dimethylolpropionsäure, Milchsäure, Tartronsäure und Citramalsäure.

3. Verfahren nach irgendeinem der vorangehenden Ansprüche, worin Klebstoffe mit einem durchschnittlichen Gehalt an NCO-Gruppen von 1 bis 10 Gewichtsprozent, bezogen auf das Gesamtgewicht von Polyol und Polyisocyanat, und einer Viskosität von 1000 bis 8000 mPas bei 50°C hergestellt werden.

4. Verfahren nach irgendeinem der Ansprüche 1 bis 3, worin die Hydroxycarbonsäure in abgemessenen Mengen zusammen mit dem Polyether-polyol und/oder Polyester-polyol in den Reaktor eingespeist wird.

5. Verfahren nach irgendeinem der Ansprüche 1 bis 4, worin die Hydroxycarbonsäure in einer Menge von 0,05 bis 1 Gewichtsprozent, bezogen auf das Gesamtgewicht von Polyol und Polyisocyanat, verwendet wird.

6. Verfahren nach irgendeinem der Ansprüche 1 bis 5, worin die angewandte Temperatur im Bereich von 30 bis 150°C liegt.

7. Verfahren zur Herstellung von mehrschichtigen Laminaten aus Folien von Kunststoffmaterialien und/oder metallisierten Folien und/oder Metallfolien, worin die nach dem Verfahren irgendeines der Ansprüche 1 bis 6 hergestellten Polyisocyanat-Klebstoffe verwendet werden.

## Revendications (Revendications pour l'(les) Etat(s) contractant(s) suivant(s): AT, BE, CH, DE, FR, GB, LI, NL, SE)

1. Adhésif à base de polyisocyanate, exempt de solvant, susceptible d'être obtenu par réaction d'au moins un polyester-polyol aliphatique linéaire ou ramifié et/ou un polyéther-polyol présentant un poids moléculaire moyen de 400 à 4000, avec au moins un polyisocyanate aliphatique et/ou aromatique contenant 2 ou 3 NCO par molécule, en présence de 0,025 à 2% en poids, exprimés par rapport au poids total de polyol et polyisocyanate, d'au moins un acide hydroxycarboxylique aliphatique contenant un nombre total de groupe OH et COOH ne dépassant pas 6 ou un anhydride en dérivant utilisé en tant qu'agent de modification.

2. Adhésif selon la revendication 1, dans lequel au moins un acide hydroxycarboxylique aliphatique est choisi dans les groupes comprenant les acides citrique, malique tartarique, gluconique, dimethylolpropionique, lactique, tartronique et citramalique.

3. Adhésif selon une des revendication précédentes, présentant une teneur moyenne en groupes NCO comprise entre 1 et 10% en poids par rapport au poids total de polyol et de polyisocyanate, et présentant une viscosité de 1000 à 800 mPas à 50°C.

4. Procédé de préparation de polyisocyanate modifié selon une quelconque des revendications 1 à 3, dans lequel au moins un polyéther-polyol et/ou au moins un polyester-polyol, tel que défini à la revendication 1, réagit avec au moins un polyisocyanate, tel que défini à la revendication 1, en présence de 0,025 à 2% en poids, exprimés par rapport au poids total de polyol et de polyisocyanate, d'au moins un acide hydroxycarboxylique aliphatique ou anhydride en dérivant, ainsi que défini dans l'une des revendications 1 ou 2.

5. Procédé selon la revendication 4, dans lequel l'acide hydroxycarboxylique est introduit en quantités définies dans le réacteur en même temps que le polyéther-polyol et/ou polyester-polyol.

6. Procédé selon une des revendications 4 et 5, dans lequel l'acide hydroxycarboxylique est employé dans des proportions de 0,05 à 1% en poids, exprimées par rapport au poids total de polyol et de polyisocyanate.

7. Procédé selon l'une quelconque des revendications 4 à 6, dans lequel la température employée est comprise entre 30°C et 150°C.

8. Stratifiés multicouches, formés de films de matières plastiques et/ou de films métallisés et/ou de films métalliques, produits par emploi d'adhésifs à base de polyisocyanate selon l'une quelconque des revendications 1 à 3.

## Revendications (Revendications pour l'(les) Etat(s) contractant(s) suivant(s): DK, GR)

1. Adhésif à base de polyisocyanate, exempt de solvant, susceptible d'être obtenu par réaction d'au moins un polyester-polyol et/ou d'au moins un polyéther-polyol, avec au moins un polyisocyanate en présence de 0,025 à 2% en poids, exprimés par rapport au poids total de polyol et de polyisocyanate, d'au moins un acide hydroxycarboxylique aliphatique ou un anhydride correspondant utilisé en tant qu'agent de modification.

2. Adhésif selon la revendication 1, dans lequel au moins un acide hydroxycarboxylique aliphatique ou anhydride en dérivant, contient un nombre total de groupes OH et COOH ne dépassant pas 6, et de préférence est choisi dans les groupes comprenant les acides citrique, maléique, tartarique, gluconique, dimethylolpropionique, lactique, tartronique et citramalique.

3. Adhésif selon une des revendications précédentes, présentant une teneur moyenne en groupes NCO comprise entre 1 et 10% en poids par rapport au poids total de polyol et de polyisocyanate, et présentant une viscosité de 1000 à 800 mPas à 50°C.

4. Procédé de préparation de polyisocyanate modifié selon une quelconque des revendications 1 à 3, dans lequel au moins un polyéther-polyol et/ou au moins un polyester-polyol, réagit avec au moins un polyisocyanate, en présence de 0,025 à 2% en poids, exprimés par rapport au poids total de polyol et de polyisocyanate, d'au moins un acide hydroxycarboxylique aliphatique ou anhydride en dérivant, ainsi que défini dans l'une des revendications 1 ou 2.

5. Procédé selon la revendication 4, dans lequel le polyester-polyol et/ou polyéther-polyol est un polyester-polyol et/ou polyéther-polyol aliphatique linéaire et/ou ramifié présentant un poids moléculaire moyen de 400 à 4000.

6. Procédé selon une des revendications 4 et 5, dans lequel le polyisocyanate est choisi dans les groupes comprenant les polyisocyanates aromatiques et/ou aliphatiques contenant 2 à 3 groupes NCO par molécule.

7. Procédé selon une quelconque des revendications 4 à 6, dans lequel l'acide hydroxycarboxylique est introduit en quantités définies dans le réacteur en même temps que le polyéther-polyol et/ou polyester-polyol.

8. Procédé selon une quelconque des revendications 4 à 7, dans lequel l'acide hydroxycarboxylique est employé en des proportions de 0,05 à 1% en poids, exprimées par rapport au poids total de polyol et de polyisocyanate.

9. Procédé selon l'une quelconque des revendications 4 à 8, dans lequel la température employée est comprise entre 30°C et 150°C.

10. Stratifiés multicouches, formés de films de matières plastiques et/ou de films métallisés et/ou de films métalliques, produits par emploi d'adhésifs à base de polyisocyanate selon l'une quelconque des revendications 1 à 3.

## Revendications (Revendications pour l'(les) Etat(s) contractant(s) suivant(s): ES)

1. Procédé de préparation d'adhésifs à base de polyisocyanate, exempt de solvant, dans lequel au moins un polyester-polyol aliphatique linéaire ou ramifié et/ou un polyéther-polyol présentant un poids moléculaire moyen de 400 à 4000, réagit avec au moins un polyisocyanate aliphatique et/ou aromatique contenant 2 ou 3 NCO par molécule, en présence de 0,025 à 2% en poids, exprimés par rapport au poids total de polyol et polyisocyanate, d'au moins un acide hydroxycarboxylique aliphatique contenant un nombre total de groupes OH et COOH ne dépassant pas 6 ou un anhydride en dérivant utilisé en tant qu'agent de modification.

2. Procédé selon la revendication 1, dans lequel au moins un acide hydroxycarboxylique aliphatique est choisi dans les groupes comprenant les acides citrique, malique, tartarique, gluconique, dimethylolpropionique, lactique, tartronique et citramalique.

3. Procédé selon une des revendications précédentes, dans lequel d'adhésifs présentant und teneur moyenne en groupes NCO comprise entre 1 et 10% en poids par rapport au poids total de polyol et de polyisocyanate, et présentant une viscosité de 1000 à 8000 mPas à 50°C sont préparés.

4. Procédé selon une quelconque des revendications 1 à 3, dans lequel l'acide hydroxycarboxylique est introduit en quantités définies dans le réacteur en même temps que le polyéther-polyol et/ou polyester-polyol.

5. Procédé selon une quelconque des revendications 1 à 4, dans lequel l'acide hydroxycarboxylique est employé dans des proportions de 0,05 à 1% en poids, exprimées par rapport au poids total de polyol et de polyisocyanate.

6. Procédé selon l'une quelconque des revendications 1 à 5, dans lequel la température employée est comprise entre 30°C et 150°C.

7. Procédé de préparation des stratifiés multicouches, formés de films de matières plastiques et/ou de films métallisés et/ou de films métallique, dans lequel d'adhésifs à base de polyisocyanate préparé selon l'une quelconque des revendications 1 à 6 sont employés.
